# EUROPEAN PATENT SPECIFICATION

(11) **EP 1 480 377 B1**
(45) Date of publication and mention of the grant of the patent: **07.09.2005**
(21) Application number: 03291223.0
(22) Date of filing: 23.05.2003
(51) Int. Cl.: H04L 12/24

(54) **Method and system for creating a protocol-independent meta-model in a Network Management System of a telecommunication network**
Verfahren und System zur Erzeugung eines protokollunabhängigen Meta-Modells in einem Netzmanagementsystem eines Telekommunikationsnetzes
Procédé et système pour la création d'un méta-modèle indépendant du protocole dans un système de gestion de réseau de télécommunications

(43) Date of publication of application: 24.11.2004
(73) Proprietor: ALCATEL, 75008 Paris (FR)
(72) Inventor: Canali, Massimo, 20059 Vimercate (Milano) (IT); Mussini, Marco, 20133 Milano (IT); Volontè, Stefano, 20052 Monza (Milano) (IT)
(74) Representative: Menzietti, Domenico

(56) References cited:
- US-A1- 2002 004 828
- JAKOBSON G ET AL: "GRACE: Building Next Generation Event Correlation Services" NETWORK OPERATIONS AND MANAGEMENT SYMPOSIUM (IEEE), 10 April 2000 (2000-04-10), pages 701-714, XP010376718
- KAWABATA T ET AL: "Component-oriented Network Management System Development" NETWORK OPERATIONS AND MANAGEMENT SYMPOSIUM (IEEE), 10 April 2000 (2000-04-10), pages 395-408, XP010376697

## Description

The present invention relates to a method for creating a protocol-independent manager/agent relationship, in a Network Management System of a telecommunication network.

When a manager/agent relationship has to be detailed, the interface and the objects exchanged have to be defined.

This is strictly correlated with the specific model to use: i.e. GDMO for Q3 network, IDL for CORBA, SMI for SNMP, etc. Moreover, in some cases, also the product release has to be taken into account.

Many models at Network Element level generate also different implementations at Network Management level to be able to understand the underlying dialects.

So there is a need to create an automatic model-independent manager/agent relationship, in particular for the use in the Network Management System of a telecommunication network, for application protocols over CORBA.

Known tools exist for transforming SQL database over CMISE or from XML to databases; however they are not optimized for both generic table-oriented databases and network management application protocols over CORBA, because they don't cover the full network management application needs. Hence manual operations are requested, and specific effort is required both for implementation and test phases.

In US 2002/0004828 A1 an element management system for a heterogeneous telecommunications network that includes network elements of different types, such as radios and fiber optic devices, is disclosed.This system provides a core set of element-independent network management messages that support basic network management functions such as fault and performence monitoring and configuration management. Management applications and user interfaces send and receive mapped network management information using the core set of messages, in the common protocol of those messages.

In Network Operations And Management Symposium (IEEE) (10-04-2000), pages 701-714 Next Generation Event Correlation Services are described using distributed service architecture. The architecture includes a multilevel hierarchy of services: the system services (standard CORBA services), the infrastructure services (e.g. event correlation, network topology service), the application services (e.g. fault and performance management), and the integrated services (e.g. SONET, ATM, IP, wireless network management). In order to provide a common event correlation solution a new architecture is disclosed connecting globalisation of event correlation, distributed service architecture, and the use of common event processing and data/knowledge presentation formalisms.

Therefore the main object of the present invention to provide a method for creating an automatic protocol-independent manager/ agent relationship, in a Network Management System of a telecommunication network.

The basic idea of the present invention is to create a meta-model (written in XML language) as a result of the application of a generic, protocol-independent interface, named CSG (Corba Strategic Gateway) tool chain.

It permits to have a generic skeleton based on XML (extensible Markup Language) as a reference for NM application starting points. This skeleton permits an application to be independent from NE-NM interface descriptions irrespective of the NE-NM model and version supported.

The skeleton describes the different implementations using unified rules based on the W3 standardized XML commands. (details can be taken directly from the W3 web site - http://www.w3.org/).

Through the creation of the CSG generic protocol-independent interface it is possible to reduce the effort needed to manage different NEs and to have a meta-model written in XML.

This solution makes it possible to hide the various differences among protocols.

A further advantage of having this meta-model is to have a XML based definition where the NE functionalities are taken into account in order to cover some lacks that can be found into the general-purpose standard models.

These functionalities are mainly the ones defined in the NMD model where the NE specific needs are covered with proprietary definitions.

These and further objects are achieved by means of an apparatus and method as described in the attached claims, which are considered an integral part of the present description.

The invention will become fully clear from the following detailed description, given by way of a mere exemplifying and non limiting example, to be read with reference to the attached drawing figures, wherein:
- Figure 1 shows a block diagram of the system in accordance with the invention;
- Figure 2 shows an example of CSG tool usage.

As known, XML is a language with shaping capabilities and can be used to support presentations of the same meaning in different forms. The format is added later by the presentation device, according to its capabilities, while the contents and logical structure is specified in the XML data. The XML language is described for example in http://www.w3.org/XML/. In the following some features of XML language are described.
- XML is for structuring data - Structured data includes spreadsheets, address books, configuration parameters, financial transactions, and technical drawings. XML is a set of rules for designing text formats that let you structure your data. XML is not a programming language, and you don't have to be a programmer to use it or learn it. XML makes it easy for a computer to generate data, read data, and ensure that the data structure is unambiguous. XML avoids common pitfalls in language design: it is extensible, platform-independent, and it supports internationalization and localization. XML is fully Unicode-compliant.
- XML looks a bit like HTML - Like HTML, XML makes use of tags (words bracketed by '<' and '>') and attributes (of the form name="value"). While HTML specifies what each tag and attribute means, and often how the text between them will look in a browser, XML uses the tags only to delimit pieces of data, and leaves the interpretation of the data completely to the application that reads it.
- XML is a family of technologies - The XML family is a growing set of modules that offer useful services to accomplish important and frequently demanded tasks, like the following. Xlink describes a standard way to add hyperlinks to an XML file. XPointer and XFragments are syntaxes in development for pointing to parts of an XML document. An XPointer is a bit like a URL, but instead of pointing to documents on the Web, it points to pieces of data inside an XML file. CSS, the style sheet language, is applicable to XML as it is to HTML. XLS is the advanced language for expressing style sheets.It is based on XSLT, a transformation language used for rearranging, adding and deleting tags and attributes. The DOM is a standard set of function calls for manipulating XML (and HTML) files from a programming language. XML Schemas help developers to precisely define the structures of their own XML-based formats: that is a language to provide means for defining the structure, content and semantics of XML documents; it also expresses shared vocabularies and allow machines to carry out rules made by people (the rules could involve filtering, collection of information, relationship between different data, etc.). There are several more modules and tools available or under development.
- XML is modular - XML allows to define a new document format by combining and reusing other formats. Since two formats developed independently may have elements or attributes with the same name, care must be taken when combining those formats. To eliminate name confusion when combining formats, XML provides a namespace mechanism. XML Schemas is designed to mirror this support for modularity at the level of defining XML document structures, by making it easy to combine two schemas to produce a third which covers a merged document structure.

According to the invention, the generic, protocol-independent interface, named CSG (Corba Strategic Gateway), is created according to the following general principles.

First of all, a set of core primitives is identified in the input model. These primitives represent fundamental operations which are common to all management protocols, such as reading and writing attribute values to/from the managed agent. Through these generic primitives, a management application can be written, for the first time, in a protocol-independent way (though of course it remains model-dependent, which will always be true). If another agent with the same model, but different protocol, has to be managed, the management application is ideally not impacted at all.

Second, a set of "abstraction" primitives are defined. These primitives let the application perform abstract management operations which may have a direct, concrete equivalent primitive in some "rich" protocols but not in other "simpler" ones. An example can be the Action primitive, which is explicitly supported in CMIP but only implicitly supported (i.e. it may only be obtained as side effect of other operations) in SNMP. The abstraction primitives let the management application programmer write code that can assume these operations are practically available even when the underlying protocol does not support these concepts.

Third, as an option, several sets of optimized, protocol-oriented primitives are identified and transformed into core primitives. The protocol-oriented primitives can be present in some protocols.

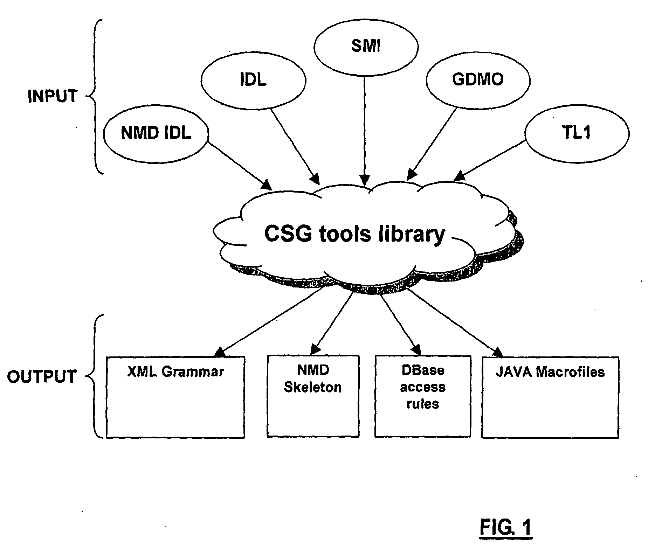

More particularly, with reference to figure 1, the CSG tool receives in input the proprietary interface definitions, for example :
NMD IDL, TL1: proprietary methods;
IDL: a CORBA method written in IDL language (Interface Data Language) ;
SMI: a method in SNMP protocol;
GDMO: a method in CMIP language.

The CSG tool analyses them and generates different output files containing different categories of information. These categories of information are the following:
- XML grammar describing the content of the interface model;
- NMD skeleton for NE specific information;
- DBase independent access rules;
- JAVA source files to provide a typed-based code immediately available from applications.

The XML meta-model is defined using the CSG tool. This tool receives in input the proprietary interface definitions, analyses them and outputs several files containing different categories of information. These set of information define the meta-language.

Hence the tool is able to decompose the input model into atomic objects, semantically meaningful. Afterwards it analyzes each atomic object identifying the relevant attributes and features such as name, syntax, access type, behaviour. As a result, each attribute is translated into output (e.g. XML/JAVA) format and moved in the proper output file. The number of input files may vary depending on which language has to be translated; while the meta language output files are always the same, so it could happen to have the split of attributes coming from one file into different output files.

The XML meta-language is composed of the following kinds of files:
**XML Model Descriptor** It describes grouping and containment relations between attributes and classes.
**DTD Schema** This schema describes the datatype of the attributes and their association with classes. It also specifies whether attributes are optional or mandatory, and their default value, if any. It may be used at run time to validate the stream of XML data coming from the agent using a validating XML parser.
**XML Data Profile** It contains type, access and other additional information in a format suitable for use by the manager for type/access rights checking and for configuring the GUI as appropriate to prevent errors, offering exactly the commands necessary to access the supported features.
**DB Access rules** It is a repository for identifying the operations that can be applicable to the attribute/object from a data base point of view: for example, read/write and create/delete permissions. It is useful for agent-side programming because such applications like Zero-installation clients have, by definition, no pre-installed database.
**JAVA Macrofiles** These files provide the Java management application developer with an API layer providing simplified access to model attributes and methods, with access control rules and syntax automatically enforced by construction. For example, no SET method will be generated for attributes with read-only access, whereas action methods will be generated with a signature containing all necessary arguments, of the appropriate types, as method parameters.
**NMD Skeleton** This file contains the definitions common to all the Network Elements NEs used by NM to manage the NE itself.

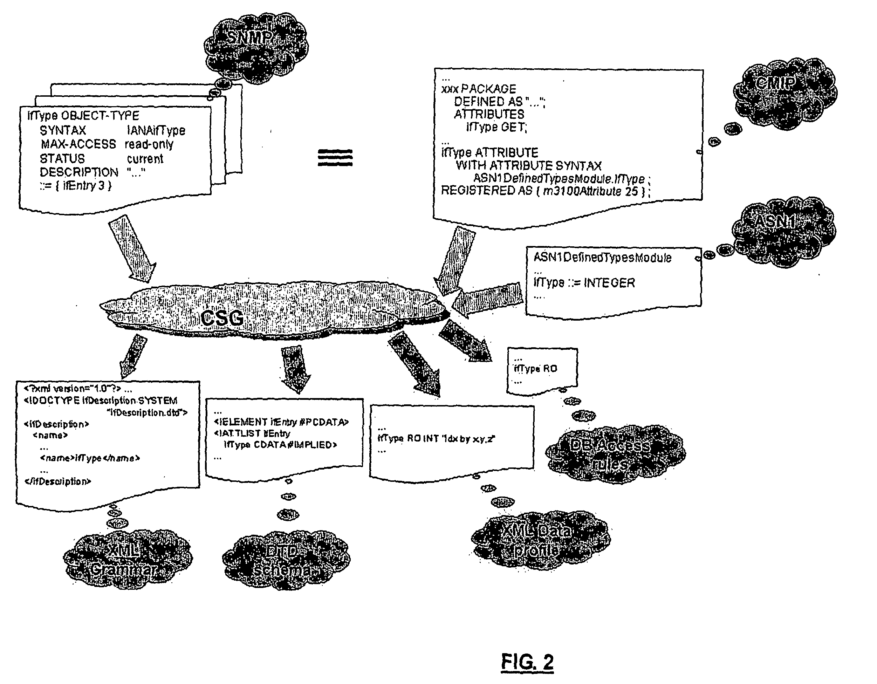

The figure 2 shows an example of definition of the meta-model starting from SNMP and CMIP protocols, where the same type of information are coded into SMI (Structure of Management Information) and GDMO.

The ASN1 input is relating to the definition made in the ASN1 (Abstract Syntax Notation) language of complex data structures and is used to define the other protocols into low level rules for the data transmission.

The input protocols are:

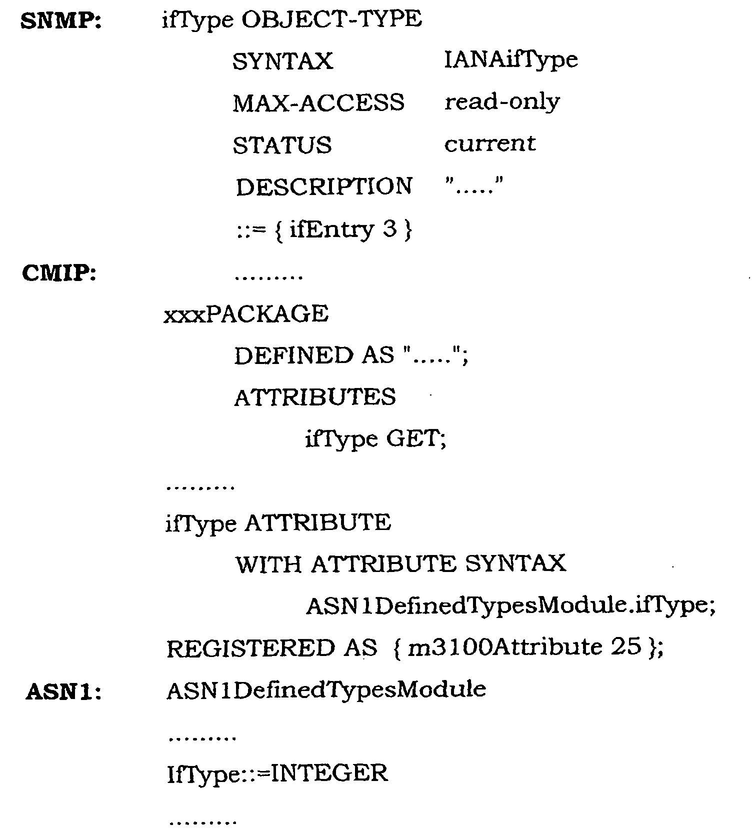

The output meta-models defined are:

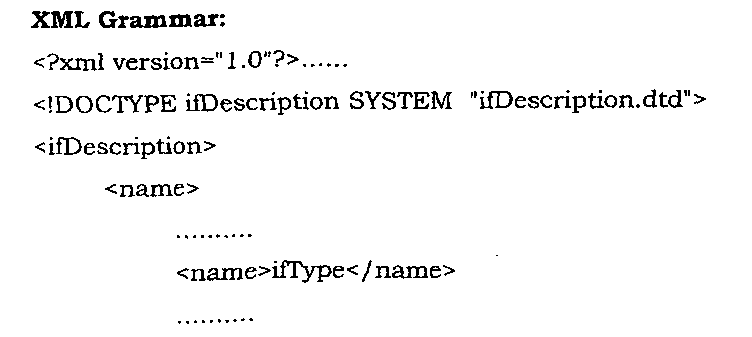

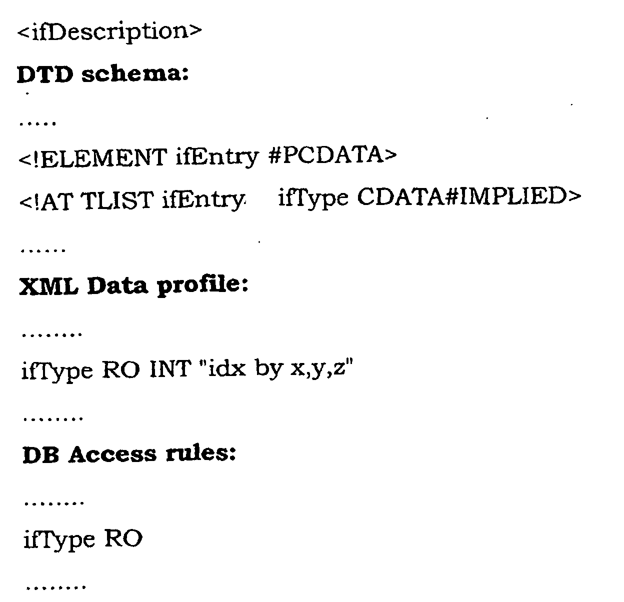

This model, focused on the management of a generic NE, is used between EML and NML.

The message is defined by one, or more, XML commands. The NMD part has the purpose to provide some NE family specific procedure, in order to give to the requestor the information in a protocol dependent way; e.g., the address of an interface is the "NSAP" for the Q3 world, "IP address + UDP port" for the SNMP, etc.

It is also evident that the NM does not care about the languages used.

Further implementation details will not be described, as the man skilled in the art is able to carry out the invention starting from the teaching of the above description.

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Many changes, modifications, variations and other uses and applications of the subject invention will become apparent to those skilled in the art after considering the specification and the accompanying drawings which disclose preferred embodiments thereof.

## Claims

1. Method for creating a protocol-independent manager/agent relationship, in a Network Management System,
**characterized in that** it comprises the following steps:
a meta-model is created as a result of a protocol-independent interface named CSG (CORBA Strategy Gateway), so as to have a generic skeleton based on XML meta- language as a reference for Network Management application starting points based on:
- a first set of core primitives, representing fundamental operations which are common to all management protocols;
- a second set of primitives to perform management operations which do not have a direct, concrete equivalent in a given protocol but can be obtained as side effect of other operations;
the said CSG receiving in input specific protocol-dependent interface definitions, analysing them and generating as output different files containing the following different categories of information:
• XML grammar describing the content of the interface model;
• NMD skeleton for network element, NE specific information;
• DBase independent access rules;
• JAVA source files to provide a typed-based code immediately available from applications.

2. Method according to claim 1, **characterized in that** said generic skeleton based on XML meta- language further comprises a third set of optimized, protocol-oriented primitives, identified and transformed into core primitives.

3. Method according to claim 1 or 2, **characterized in that** it includes steps of providing files of the following kind:
a file named XML Model Descriptor, describing grouping and containment relations between attributes and classes;
a file named DTD Schema, describing the datatype of the attributes and their association with classes;
a file named XML Data Profile, containing type, access and other additional information in a format suitable for use by the manager for type/access rights checking and for configuring a Graphical User Interface;
a file named DB Access rules, a repository identifying the operations that can be applicable to the attribute/object from a data base point of view;
files named JAVA Macrofiles, files providing the Java management application developer with an API layer providing simplified access to model attributes and methods, with access control rules and syntax automatically enforced by construction;
a file named NMD Skeleton, a file containing the definitions common to all the Network Elements (NEs) used by the Network Management to manage the NEs.

4. Network Management System of a telecommunication network **characterized in that** it comprises means for implementing all the steps of the method of any of claims 1 to 3.

5. Computer program comprising computer program code means adapted to perform all the steps of claims 1 to 3. when said program is run on a computer.

6. A computer readable medium having a program recorded thereon, said computer readable medium comprising computer program code means adapted to perform all the steps of claims 1 to 3 when said program is run on a computer.

## Patentansprüche

1. Verfahren zur Erzeugung einer protokollunabhängigen Manager/Agentenbeziehung in einem Nerzwerkmanagementsystem, **dadurch gekennzeichnet, dass** es folgende Schritte umfasst:
- ein Metamodell wird erzeugt als Ergebnis einer protokollunabhängigen Schnittstelle, die als CSG (CORBA Strategy Gateway) bezeichnet wird, um ein allgemeines Gerüst zu erstellen, basierend auf XML Meta- Sprache als ein Bezug für Startpunkte für Netzwerkmanagementanwendungen, basierend auf:
- einem ersten Satz von Core Primitiva, die grundsätzliche Vorgänge beschreiben, die gemeinsam für alle Managementprotokolle sind;
- einem zweiten Satz von Primitiva zur Durchführung von Managementvorgängen, die kein direktes, konkretes Äquivalent in einem gegebenen Protokoll haben, aber erhalten werden können als Nebenprodukt anderer Vorgänge;
wobei das besagte CSG als Eingangsinformation spezifische protokollabhängige Schnittstellendefinitionen empfängt, diese analysiert und als Ausgangsinformation verschiedene Dateien erzeugt, die die folgenden unterschiedlichen Kategorien von Information enthalten:
• XML Grammatik, die den Inhalt des Schnittstellenmodells beschreibt;
• NMD Gerüst für spezifische Netzwerkelement-, NE- , Information;
• datenbankunabhängige Zugangsregeln;
• JAVA Quelldateien, um einen typengebundenen Code zur Verfügung zu stellen, der unmittelbar aus den Anwendungen entnehmbar ist.

2. Verfahren nach Anspruch 1, **dadurch gekennzeichnet, dass** das besagte allgemeine Gerüst, basierend auf XML Meta- Sprache, weiterhin einen dritten Satz von optimierten, protokollorientierten Primitiva umfasst, die identifiziert und in Core Primitiva umgewandelt wurden.

3. Verfahren nach Anspruch 1 oder 2, **dadurch gekennzeichnet, dass** es Schritte zum Bereitstellen von Dateien der folgenden Art umfasst:
- eine Datei, XML Model Descriptor genannt, die die Gruppen- und Containment-Beziehungen zwischen Attributen und Klassen beschreibt;
- eine Datei, DTD Schema genannt, die den Datentyp der Attribute und ihre Verbindung mit Klassen beschreibt;
- eine Datei, XML Data Profile genannt, die die Typen-, Zugangs- und andere zusätzliche Information in einem Format enthält, das geeignet ist für die Nutzung vom Manager für
- Typen- / Zugangsrechtüberprüfung und für die Konfigurierung einer graphischen Benutzerschnittstelle;
- eine Datei, DB Access Rules genannt, einem Datenspeicher, der die Vorgänge identifiziert, die aus Sicht einer Datenbank für das Attribut / Objekt anwendbar sein können;
- eine Datei, JAVA Macrofiles genannt, die die Java Managementanwendungs-Entwicklung zur Verfügung stellt mit einer API - Ebene, die den vereinfachten Zugang zu den Modellattributen und Verfahren ermöglicht, mit Zugangskontrollregeln und einer Syntax, die automatisch durch den Aufbau erzwungen wird;
- eine Datei, NMD Skeleton genannt, einer Datei, die die Definitionen enthält, die gemeinsam für alle Netzwerkelemente (NEs) gelten und vom Netzwerkmanagement für die Verwaltung der NEs benutzt werden.

4. Netzwerkmanagementsystem eines Telekommunikationsnetzes, **dadurch gekennzeichnet, dass** es Mittel umfasst, mit denen alle Schritte des Verfahrens nach einem der Ansprüche 1 bis 3 ausgeführt werden.

5. Computerprogramm, das Computerprogrammcodemittel umfasst, die eingerichtet sind, alle Schritte des Verfahrens nach den Ansprüchen 1 bis 3 auszuführen, wenn das besagte Programm auf einem Computer abläuft.

6. Computerlesbares Medium, das ein darauf aufgezeichnetes Programm enthält, wobei das besagte computerlesbare Medium Computerprogrammcodemittel umfasst, die eingerichtet sind, alle Schritte des Verfahrens nach den Ansprüchen 1 bis 3 auszuführen, wenn das besagte Programm auf einem Computer abläuft.

## Revendications

1. Procédé pour créer une relation gestionnaire/agent indépendante du protocole dans un système de gestion de réseau,
**caractérisé en ce qu'**il comprend les étapes suivantes :
un méta-modèle est créé en résultat d'une interface indépendante du protocole appelée CSG (CORBA Strategy Gateway), de façon à disposer d'un squelette générique basé sur le méta-langage XML pour servir de référence à des points de départ d'une application de gestion de réseau basée sur :
- un premier ensemble de primitives principales, représentant des opérations fondamentales qui sont communes à tous les protocoles de gestion ;
- un deuxième ensemble de primitives pour exécuter des opérations de gestion qui n'ont pas d'équivalent direct, concret, dans un protocole donné mais qui peuvent être obtenues comme un effet secondaire d'autres opérations ;
ladite interface CSG recevant, en entrée, des définitions d'interface dépendantes du protocole, les analysant et délivrant en sortie différents fichiers contenant les différents types de données suivants :
• une grammaire XML décrivant le contenu du modèle d'interface ;
• un squelette NMD pour des données spécifiques à un élément de réseau, NE (Network Element) ;
• des règles d'accès indépendantes DBase ;
• des fichiers JAVA source pour fournir un code basé type immédiatement disponible à partir d'applications.

2. Procédé selon la revendication 1, **caractérisé en ce que** ledit squelette générique basé sur le méta-langage XML comprend en outre un troisième ensemble de primitives optimisées, orientées protocole, identifiées et transformées en primitives principales.

3. Procédé selon la revendication 1 ou 2, **caractérisé en ce qu'**il comprend les étapes consistant à fournir des fichiers des types suivants :
un fichier appelé Descripteur de modèle XML, décrivant les relations de groupement et de confinement entre les attributs et les classes ;
un fichier appelé Schéma DTD, décrivant le type de données des attributs et leur association avec des classes ;
un fichier appelé Profil de données XMT, contenant le type, des données d'accès et d'autres données supplémentaires dans un format approprié pour l'utilisation par le gestionnaire pour le contrôle du type/des droits d'accès et pour la configuration d'une interface utilisateur graphique ;
un fichier appelé Règles d'accès à la BD, un dépôt de données identifiant les opérations qui peuvent être applicables à l'attribut/l'objet depuis le point de vue d'une base de données ; des fichiers appelés Macrofichiers JAVA, qui sont des fichiers fournissant au développeur d'une application de gestion Java une couche d'interface lui fournissant un accès simplifié à des attributs de modèles et à des procédés, avec des règles de commande d'accès et une syntaxe automatiquement mises en oeuvre par la construction ;
un fichier appelé Squelette NMD, qui est un fichier contenant les définitions communes à tous les éléments du réseau (NE) utilisées par le système de gestion du réseau pour gérer les NE.

4. Système de gestion de réseau d'un réseau de télécommunication, **caractérisé en ce qu'**il comprend des moyens pour exécuter toutes les étapes du procédé selon l'une quelconque des revendications 1 à 3.

5. Programme d'ordinateur comprenant des moyens de codage de programme d'ordinateur adaptés pour exécuter toutes les étapes du procédé selon les revendications 1 à 3, lorsque ledit programme est exécuté sur un ordinateur.

6. Support lisible par un ordinateur ayant un programme enregistré sur lui, ledit support lisible par un ordinateur comprenant des moyens de codage de programme d'ordinateur adaptés pour exécuter toutes les étapes du procédé selon les revendications 1 à 3, lorsque ledit programme est exécuté sur un ordinateur.
